(19) Europäisches Patentamt European Patent Office Office européen des brevets

(11) **EP 1 889 094 B1**

(12) **EUROPÄISCHE PATENTSCHRIFT**

(45) Veröffentlichungstag und Bekanntmachung des Hinweises auf die Patenterteilung:
**28.09.2011 Patentblatt 2011/39**

(21) Anmeldenummer: **06753421.4**

(22) Anmeldetag: **26.04.2006**

(51) Int Cl.:
*G01T 1/02* (2006.01)     *G01T 1/06* (2006.01)
*G01T 1/10* (2006.01)

(86) Internationale Anmeldenummer:
**PCT/EP2006/003862**

(87) Internationale Veröffentlichungsnummer:
**WO 2006/131172 (14.12.2006 Gazette 2006/50)**

(54) **VERFAHREN FÜR DIE SPEKTROMETRISCHE PHOTONENDOSIMETRIE FÜR RÖNTGEN- UND GAMMASTRAHLUNG**

METHOD FOR THE SPECTROMETRIC PHOTON DOSIMETRY FOR X-RAY AND GAMMA RADIATION

PROCEDE DESTINE A LA DOSIMETRIE PHOTONIQUE SPECTROMETRIQUE POUR DES RAYONS X ET GAMMA

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.06.2005 DE 102005026795**

(43) Veröffentlichungstag der Anmeldung:
**20.02.2008 Patentblatt 2008/08**

(73) Patentinhaber: **GSI Helmholtzzentrum für Schwerionenforschung GmbH 64291 Darmstadt (DE)**

(72) Erfinder: **FEHRENBACHER, Georg 64367 Mühltal (DE)**

(56) Entgegenhaltungen:
**US-A- 3 646 347**

- **FEHRENBACHER G ET AL: "Unfolding the response of a Ge detector used for in-situ gamma-ray spectrometry" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL, Bd. 383, Nr. 2, 11. Dezember 1996 (1996-12-11), Seiten 454-462, XP004016209 ISSN: 0168-9002**

- **PANGRATZ, A., FEHRENBACHER, G., SENGER, E., BAYER, A.: "Analyse der Aktivierung von Beschleunigerstrukturen und der damit verbundenen möglichen Strahlenexposition durch Gammastrahlung" PRAXIS DES STRAHLENSCHUTZES: MESSEN, MODELLIEREN, DOKUMENTIEREN: 34. JAHRESTAGUNG DES FACHVERBANDES FÜR STRAHLENSCHUTZ E.V., KLOSTER SEEON, 21.-25.04.2002, Januar 2002 (2002-01), Seiten 485-492, XP008066074 in der Anmeldung erwähnt**

- **"Strahlenschutzverordnung"[Online] 18. Juni 2002 (2002-06-18), Seiten 112-114, XP002388310 Gefunden im Internet: URL:http://www.rp-giessen.de/me_in/medien/ strahlschutz/ strlschv_18062002.pdf> [gefunden am 2006-07-03]**

- **CLOUVAS, A., XANTHOS, S., ANTONOPOULOS-DOMIS, M., SILVA, J.: "Monte Carlo based method for conversion of in-situ gamma ray spectra obtained with a portable Ge detector to an incident photon flux energy distribution" HEALTH PHYSICS, Bd. 74, Nr. 2, 1998, Seiten 216-230, XP008066085 in der Anmeldung erwähnt**

EP 1 889 094 B1

**Beschreibung**

Die Erfindung betrifft ein Verfahren für die spektrometrische Photonendosimetrie für Röntgen- und Gammastrahlung aus dem keV- bis in den MeV-Bereich zur Bestimmung der Gammadosisleistung integral als auch nuklidspezifisch.

Bisherige Mess-Systeme zur Bestimmung der Gamma-Dosisleistung im Routinebetrieb basieren im Wesentlichen auf rein zählenden Systemen, die über einen Kalibrierfaktor die Zählrate in Dosisleistung umsetzen. Die technische Herausforderung für den Messgerätehersteller besteht darin, die Energie- und Winkelabhängigkeit des Mess-Systems so an die abzubildende Messgröße anzupassen, dass diese durch Optimierung der Anordnung der aktiven Komponenten und der passiven Absorber möglichst genau wiedergegeben werden. Mit der Einführung von spektrometrischen Systemen, wie z. B. NaJ oder hochauflösende Ge-Detektoren, haben sich neue Möglichkeiten ergeben, die Gammadosisleistung zu bestimmen. Die Ermittlung von Photonenspektren eröffnet Vorteile bei der Analyse von Strahlungsfeldern. So können relativ einfach verschiedene Dosisgrößen ermittelt werden, wie z.B. die Umgebungsäquivalentdosis, oder unter Annahme von Bestrahlungsgeometrien (PA (parallel von hinten), AP(parallel von vorne), ISO (gleichmäßig von überall), LAT (seitlich), ROT (drehend) etc.) auch Organdosen oder die effektive Dosis.

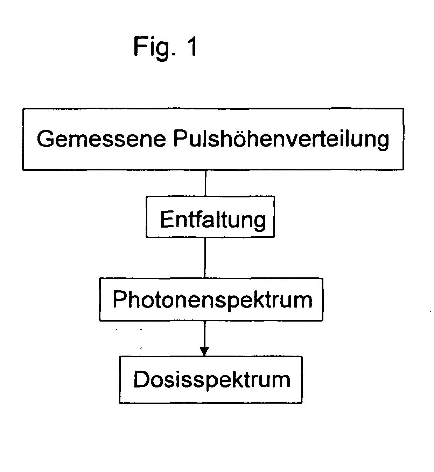

Kommerzielle spektrometrische Detektionssysteme haben bisher nur Näherungsverfahren verwendet, um das Photonenspektrum und das Dosisspektrum zu ermitteln. Die mit einem Detektor und einem Vielkanalanalysator gemessenen Verteilungen sind nur näherungsweise reale Photonenspektren, sie müssen auf die Ereignisse korrigiert werden, bei denen nur Teilenergiedeponierungen der einfallenden Photonen stattfinden. Für hoch auflösende Detektoren gibt es Verfahren, so genannte Entfaltungsverfahren, mit denen sich Photonenspektren aus gemessenen Pulshöhenverteilungen mit hoher Energieauflösung ermitteln lassen (siehe das in Figur 1 dargestellte Flussdiagramm).

Durch Anwendung von Dosiskonversionsfaktoren lassen sich aus dem Photonenspektrum das Dosisspektrum und über dessen Aufsummierung die integrale Dosis bestimmen. Das Entfaltungsverfahren verwendet detektorspezifische Antwortfunktionen, die z. B. mit Monte-Carlo-Programmen berechnet werden können. Die Energieauflösung der Antwortfunktionen entspricht im besten Falle dem des Detektors, im praktischen Fall jedoch in etwa dem fünf- bis zehnfachen der Energieauflösung des Detektors. Das Entfaltungsverfahren beruht auf einer Matrixinversion, die in der Literatur erwähnten Beispiele sind für einen weiten Energiebereich bis ca. 2 oder 3 MeV realisiert worden; somit muss mit einer großen Matrix und vielen Operationen für die Matrixinversion gearbeitet werden.

Das Verfahren belegt einen großen Speicherplatz und verbraucht CPU-Zeit, um die Photonen-Spektren zu ermitteln. Wenn das Verfahren oft wiederholt wird, ist der Ressourcenverbrauch unnötig hoch, das ist der Rechenaufwand bzw. Energieverbrauch, welcher für kleinere integrierte Messgeräte einen erhöhten Zeitaufwand und Speicherbedarf mit sich bringen.

In einem GSI-Vortrag vom 26. 4. 2005 zur spektrometrischen Photonendosimetrie wird eine Methode zur nuklidspezifischen Expositionsabschätzung vorgestellt. Die Messung der Ortsdosis wird nach § 39 Strahlenschutz-Verordnung, StrlSchV, vorgenommen. Die Messung der Ortsdosis wird in Ergänzung oder als Ersatz für die Ermittlung der Personendosis nach § 41 StrlSchV durchgeführt. Das Verfahren besteht darin, dass mit einem Detektor, HPGe oder NaJ beispielsweise, die Pulshöhenverteilung $M_i$ gemessen wird. Mit einem Monte-Carlo-Programm, z.B. EGS4, wird die Antwortfunktion geometrieabhängig, z. B. isotrop oder parallel, berechnet, woraus sich die Antwortmatrix $R_{ij}$ ergibt. Nun wird daraus die Energieverteilung der Photonen, das Photonenspektrum $\Phi_j$ über die Abbildungsgleichung

$$M_i \; = \; \Sigma \; R_{ij}\Phi_j$$

bestimmt. Summiert wird dabei von j = 1 bis $n_{max}$. (In der Abbildungsgleichung ist $M_i$ die gemessene Verteilung). Aus der Energieverteilung der Photonen wird im nächsten Schritt mit Hilfe der Konversionsfaktoren z.B. die Umgebungsäquivalentdosis H* (10), die Organdosen oder die effektive Dosis gewonnen. Ein Beispiel für Antwortfunktionen, der Umgebungsstrahlung in einem Labor, die spektrale Kermaverteilung (KERMA = kinatic energy released in matter) und das Beispiel der Aktivierung an einem Beschleuniger werden u. a. vorgestellt.

Von A. Pangratz, G. Fehrenbacher et al. wurde 2002 die Arbeit "Analyse der Aktivierung von Beschleunigerstrukturen und der damit verbundenen möglichen Strahlungsexposition durch Gammastrahlung" in "Praxis des Strahlenschutzes: Messen, Modellieren, Dokumentieren", 34. Jahrestagung des Fachverbandes für Strahlenschutz e.V, Kloster Seeon, Januar 2002, S. 485-492. vorgestellt. In dieser Arbeit werden Beispiele von Gammaspektren angegeben, die am Strahlrohr des GSI-Schwerionensynchrotrons, SIS, nach einer Strahlzeit mit Deuteriumionen an Strukturen mit erhöhten strahlverlusten gemessen wurden. Aus der mit Hilfe eines tragbaren HPGe-Detektors gemassenen Pulahöhenverteilung werden durch Entfaltung die spektrale Photonenflussdichte und das Dosisspektrum bestimmt. Die zur Entfaltung notwendigen Antwortfunktionen wurden mit dem Simulationaprogramm EGS4 bestimmt. Die aus den Spektren ermittelten Dosisleistungen werden mit den Messwerten eines Geiger-Müller-zählrohres verglichen. Der Anteil der ungestreuten Strahlung an der Gesamtdosisleistung wird an einem Beispiel abgeschätzt.

Darüber hinaus haben G. Fehrenbacher et al.

in dem Artikel "Unfolding the response of a Ge detector used forin-situgamma-ray spectrometry" in der Zeitschrift "Nuclear instruments & methods in physics research, section - A: accelerators, spectrometers, detectors and associated equipment", Elsevier, Amsterdam, NL, Band 383, Nr. 2, vom 11. September 1996 auf den Seiten 454-462 untersucht, ob die Antwortfunktioren moderner, transportabler, hochreiner Germanium-Detektoren unter Verwendung von Monte-Carlo-Simulationen mit einer ausreichenden Genauigkeit berechnet werden können, um hieraus zuverlässig ein einfallendes Photonen-Fluenzspekzrum messen zu können. Hierzu wurden gemessene und berechnete Anzworten für in-situ-Spektroskopie miteinander verglichen.

In US 3,646,347 A ist darüber hinaus ein Verfahren zur Echtzeit-Messung einer Strahlungsdosis beschrieben, bei dem eine einfallende Strahlung mit einem Spektrometer gemessen wird und die Pulshöhen des derart gewonnenen Strahlungssignals mit einer Umrechnungsfunktion auf eine Strahlungsdosis umgerechnet werden.

A. Clouvas et al. stellen in Health Physics, Feb. 1998, Vol. 74, No. 2, den Aufsatz "Conversion of in-situ gamma ray spectra" vor. Eine auf der Monte-Carlo-Methode beruhende Konversion eines in-situ γ-Strahlen Spektrums in eine Photonenfluss-Energieverteilung wird vorgeschlagen. Das Spektrum wurde mit einem tragbaren Ge-Detektor gemessen. Das Spektrum wird zunächst von den Teilabsorptions- und kosmischen Strahlenereignissen befreit, um nur die Ereignisse übrig zu lassen, die mit der vollen Absorption der Gammastrahlung zusammenhängen. An das verbliebene Spektrum wird die Effizienzkurve der Vollenergiedeponierungen des Detektors, bestimmt durch kalibrierte Punktquellen und Monte-carlo-Simulationen, angewendet und die Photonenfluss-Energieverteilung wird abgeleitet. Die Ereignisse, die mit der Partikelabsorption in dem Detektor zusammenhängen, werden durch die Monte-Carlo-Simulation für unterschiedlich einfallende Photonenenergien und Winkel berechnet.

Das noch nicht in die Routine der technischen Praxis umgesetzte Entfaltungsverfahren würde für den Fall der reinen Ermittlung der Dosisleistung zu aufwendig und zu resourcenintensiv sein, wenn mit voller Auflösung des Detektors bei voller Anzahl an Kanälen des Vielkanalanalysators gearbeitet wird. Für den Routinefall, in dem keine Radionuklidzuordnung erfolgen muss, ist der investierte Rechen- und Speicheraufwand unnötig hoch.

Es gibt bisher nur Geräte, die lediglich als Spektrometer verwendet werden und deren Softwareteil für o. g. Methode separat entwickelt wurde.

Der Erfindung liegt die Aufgabe zugrunde, mit gemessenen Pulshöhenverteilungen zu arbeiten, deren Energieauflösung an die zu stellende Messaufgabe angepasst ist.

Die Aufgabe wird durch die Schritte des Verfahrensanspruchs 1 gelöst. Die Schritte sind die folgenden:

Das Spektrum wird in mindestens einer Energiegruppe gemessen, ohne Dosimetrieinformation zu verlieren und um die Rechnerresourcen zu schonen.

Die Messung der Pulshöhenverteilung wird mit einem Spektrometer und einem Pulshöhenanalysator durchgeführt, wobei das Spektrometer eine Anzahl Kanäle derart hat, dass das Spektrum durch die Pulshöhenverteilung mit einer geforderten Auflösung im gesamten Energiebereich abgebildet wird. Die Kanäle liegen für das hoch auflösende Spektrometer äquidistant auseinander. Dies ermöglicht eine Zuordnung der Dosisanteile zu einzelnen Radionukliden im späteren Analyseverfahren. Im Entfaltungsschritt wird die gemessene Pulshöhenverteilung über einen Entfaltungsvorgang, Matrixinversion, in ein Photonenspektrum umgerechnet, wozu in einem Entfaltungsvorgang Antwortfunktionen benutzt werden, die dieselbe Energieauflösung wie die Pulshöhenverteilung haben.

Das Photonenspektrum:

Unter Anwendung von Dosiskonversionsfaktoren wird das Dosisspektrum berechnet. Die energieabhängigen Dosiskonversionsfaktoren werden jeweils auf die mittlere Energie des entsprechenden Energieintervalls bezogen. Durch Aufsummierung des Dosisspektrums wird die integrale Dosisleistung oder Dosis, bezogen auf das Messzeitintervall, ermittelt und damit die Dosisleistung bestimmt. Bei hoher Dosisleistung wird die aktive Messzeit untersetzt durch Abschaltung der Datenaufnahme in gleiche Zeitintervallen und bei der späteren Dosisermittlung wieder korrigiert, wobei die Dauer der zeitlichen Lücken an das Niveau der Dosisleistung angepasst wird.

Das Spektrometer wird zur Ermittlung der integralen Dosisleistung in der niedrig auflösenden Betriebsart geschaltet, was häufig die Standardnutzung des Spektrometers ist, wenn die integrale Dosisleistung im Vordergrund steht. Das Spektrometer wird zur Analyse der Strahlungsquellen, bei denen Nuklide identifiziert werden müssen, von denen erhöhte Dosisleistungen verursacht werden, auf die hoch auflösende Betriebsart umgeschaltet.

Nach Anspruch 2 beträgt die Anzahl an Kanälen typischerweise $2^{11} = 2048$, um die Pulshöhenverteilung mit ausreichender Auflösung im gesamten Energiebereich abzubilden. Dabei liegen die Kanäle für das hoch auflösende Spektrometer typischerweise zwischen 0,5 und 1 keV äquidistant auseinander. Dies ermöglicht eine Zuordnung der Dosisanteile zu einzelnen Radionukliden im späteren Analyseverfahren.

Um bei sehr hohen Dosisleistungen pile-up-Effekte zu verhindern, wird die aktive Messzeit untersetzt durch Abschaltung der Datenaufnahme in gleiche Zeitintervalle untersetzt und wird bei der späteren Dosisermittlung wieder korrigiert. Die Dauer der zeitlichen Lük-

ken wird an das Niveau der Dosisleistung angepasst (Anspruch 3).

Zusätzlich zur Umgebungsäquivalentdosis werden nach Anspruch 4 die Organdosen durch Anwendung richtungsspezifischer Konversionsfaktoren berechnet werden, wenn die Kenntnis über die Bestrahlungsgeometrien vorliegt (AP, PA, LAT, ROT, isotropic, veröffentlicht in ICRP 74 (International Commission on Radiological Protection, Publication Nr. 74).

Das Verfahren ist geeignet für periodisch strukturierte Dosisleistungen mit minimaler Pulslänge, wobei die Bearbeitungszeit des Messgeräts und die Pulsperiode aufeinander abgestimmt sein müssen. Es können deshalb sowohl kontinuierlich strahlende (Anspruch 4) als auch periodisch strukturiert (Anspruch 6) strahlende Strahlungsquellen vermessen werden.

Das hier gewählte kombinierte Verfahren verbindet zwei Arten der Spektrenverarbeitung.
Es gibt zwei Betriebsmodi des Spektrometers:

a) hohe Energieauflösung und Möglichkeit das Entfaltungsverfahren Peak-spezifisch, d.h. Nuklidspezifisch anzuwenden und die Dosisermittlung auf die einzelnen Radionuklide zu beziehen.

b) Betrieb des Spektrometers in reduzierter Energieauflösung und einer geringeren Anzahl an Kanälen.

Im Fall b) wird die Energieauflösung an die Dosiskonversionsfunktion derart angepasst, dass die Dosis zwar hinreichend genau bestimmt wird, die Anzahl der Kanäle in Bezug auf die maximale physikalische Energieauflösung des Detektors aber erheblich reduziert ist, so dass das Verfahren weniger Ressourcen benötigt und im Ablauf erheblich schneller ist.

Die Neuheit besteht darin, dass mit gemessenen Pulshöhenverteilungen gearbeitet wird, deren Energieauflösung an die zu stellende Messaufgabe angepasst ist. Im Routinefall ist eine Dosisleistungsmessung mit hinreichender Genauigkeit aber mit hoher Messwiederholfrequenz zu leisten. Im Fall der erweiterten Analyse kann mit der bestmöglichen Energieauflösung und der Möglichkeit der Zuordnung der Dosisleistung zu den einzelnen Radionukliden gearbeitet werden. Die Wahl zwischen diesen beiden Messmodi ermöglicht verbesserte Messungen der jeweiligen Mess-Aufgabe anzupassen.

Das Verfahren kombiniert zwei Anforderungen in einem System:

a) Betrieb bei besserer Energieauflösung und der Möglichkeit die Dosisanteile einzelnen Nukliden zuzuordnen und

b) der Fall, in dem die mit hoher Wiederholungsrate die Dosisleistung schnell und ausreichend genau ermittelt werden soll.

In beiden Fällen besteht die Möglichkeit verschiedene Dosismessgrößen oder Organdosen zu bestimmen, was bisher bei rein zählenden Systemen nicht oder nur schwer möglich war.

Im Folgenden wird das Verfahren anhand der Zeichnung noch näher erläutert. Die Figuren der Zeichnung zeigen:

Figur 1      die prinzipielle Vorgehensweise;
Figur 2      das Photonenspektrum mit Zuordnung der Dosisleistung;
Figur 3      das Photonenspektrum und die kumulative Dosisverteilung;
Figur 4      Antwortfunktionen;
Figur 5      Struktur der Verteilung.

Die in Fig. 1 vorgestellte, prinzipielle Vorgehensweise zur Ermittlung von Photonen- und Dosisspektren besteht aus den Schritten: Gemessenen Pulshöhenverteilung, rechnerische Entfaltung, daraus gewonnenes Photonenspektrum und als Ergebnis das aussagende Dosisspektrum.

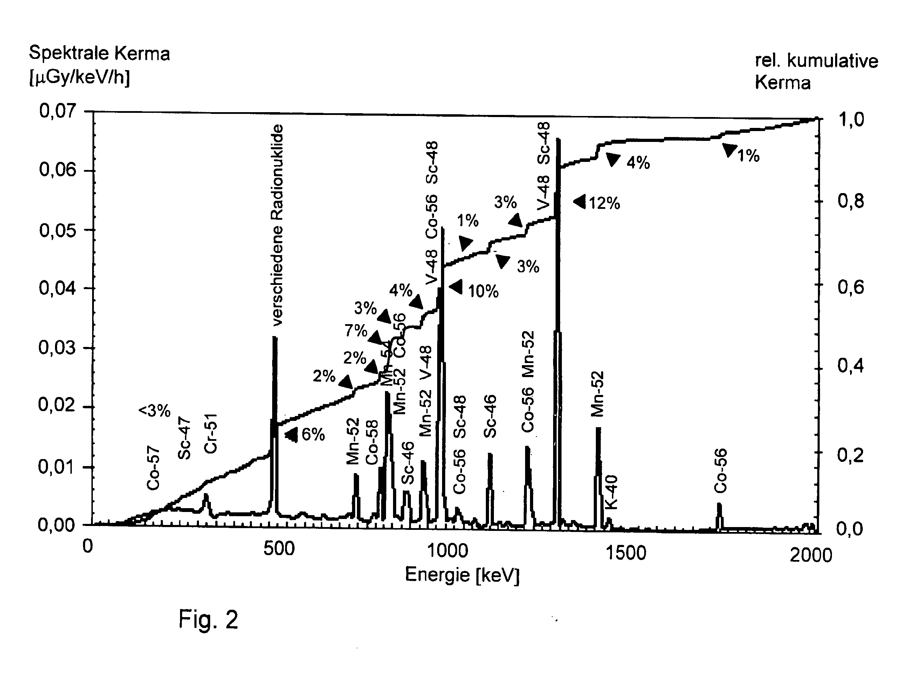

In Fig. 2 ist als Beispiel für die Messung die berechnete spektrale und relative kumulative Kerma dargestellt. Die Radionuklide wurden anhand der Energielinien identifiziert und mit Hilfe der spektralen Kermarate der Anteil pro Peak bestimmt. Wie dargestellt, handelt es sich bei den identifizierten Radionukliden um Co-56, Co-57, Co-58, Cr-51, V-48, Sc-47, Sc-48, Mn-52 und Mn-54. Des Weiteren lässt sich erkennen, dass ca. 60% der gemessenen Dosisleistung aus primären, ungestreuten Photonenstrahlung und nicht aus der Streustrahlung resultiert. Durch die Kenntnis der Halbwertszeiten kann die Abnahme der Gesamtdosisleistung abgeschätzt werden. Fig. 2 zeigt das Photonenspektrum mit Zuordnung der Dosisleistung zu den Radionukliden sowie die kumulative Dosisfunktion für die Messgröße Luft-Kerma für einen Ge-Detektor. Die Energieauflösung ist 10 keV für das Spektrum und das Entfaltungsverfahren. Das Verfahren wurde in der Version der höheren Auflösung (Spektrum in 10 KeV Intervallen) für einen Ge-Detektor z. B. an aktivierten Strukturen des GSI-Beschleunigers gemessen. Das Photonenspektrum wurde ermittelt, und es konnten die Beiträge der einzelnen Radionuklide zur Gesamtdosis abgeschätzt werden. In Fig. 2 ist das Ergebnis dargestellt mit den Prozentangaben der einzelnen Peaks zur Gesamtdosis. Die kumulative Dosis konnte mit einem integralen Handmessgerät bestätigt werden. Die Dosiswerte sind hier auf die Messgröße Kerma bezogen.

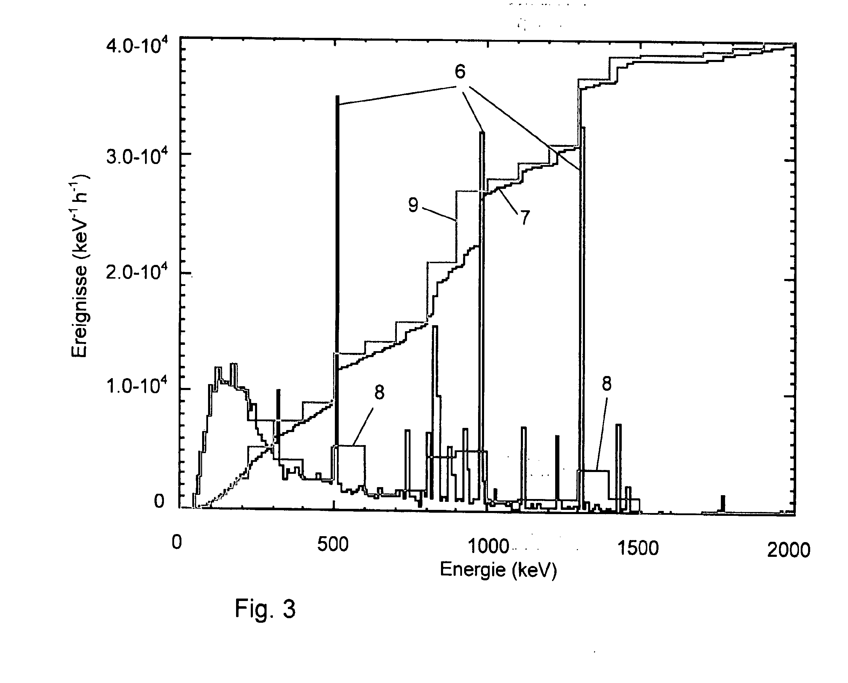

Weiter sind Photonenspektren angegeben, die in zwei Energieauflösungen dargestellt sind. Im ersten Fall ist die Energieauflösung wie in Beispiel 1 (Fig. 2) mit 10 KeV angegeben, im zweiten Fall sind nur für kleine Energien bis 200 keV das Spektrum in 10 keV Schritten angegeben. Für höhere Energien ist das Spektrum nur in 100 keV Schritten angegeben. Durch solch eine Energieaufteilung wird die Anzahl der Energieintervalle von 200 auf 40 reduziert. Die ermittelte Dosis, siehe Fig. 3, differiert in beiden Fällen um weniger als 1%, so dass das hier gewählte Verfahren als hinreichend genau einzustufen ist.

Fig. 3 zeigt das Photonenspektrum 6 und kumulative Dosisverteilung 7 für 10 keV Auflösung. Das Verfahren wurde wiederholt für eine gröbere Energieaufteilung 8, die kumulative Dosisverteilung 9 mit der neuen Energieaufteilung wurde erneut berechnet. Es sind die Ergebnisse angegeben, mit dem Photonenspektrum in 10 keV Auflösung 6, der zugehörigen kumulativen Dosis 7, dem Spektrum in gröberer Energieauflösung 8, sowie der zugehörigen kumulativen Dosis 9. Die Dosiswerte sind hier auf die Messgröße Umgebungsäquivalentdosis H* (10) bezogen.

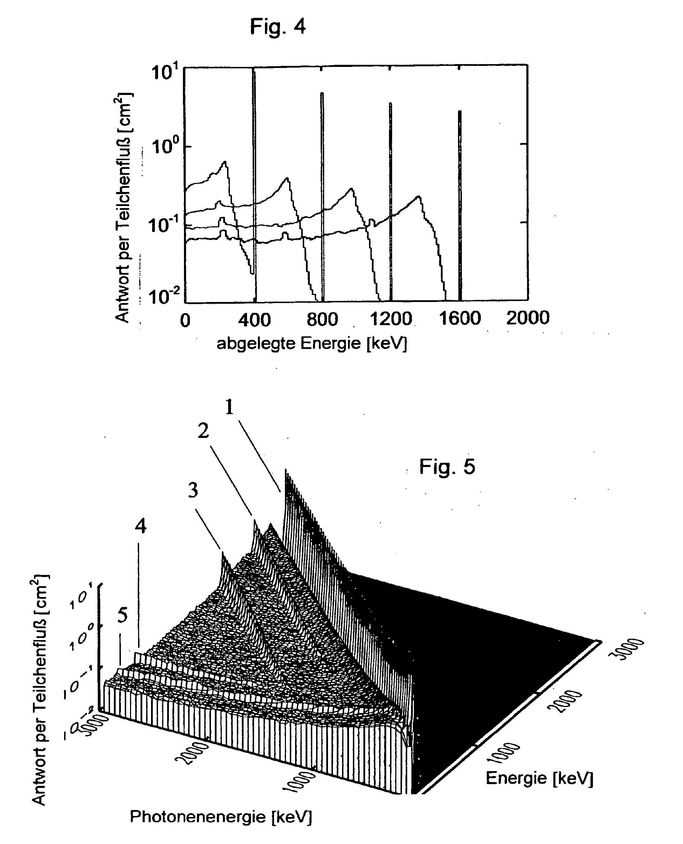

Figuren 4, einzeln, und 5, insgesamt, zeigen das Beispiel für eine Antwortmatrix. In Figur 4 ist die Antwort für den Teilchenfluss pro $cm^2$ über der abgelegten (deponierten) Energie in keV aufgetragen. Es werden die Berechnung der Antwortfunktionen für Photonen der Energien 400, 800, 1200 und 1600 keV dargestellt, und zwar bei einer Parallelbestrahlung von vorne. Es sind die Antwortfunktionen für Photonenstrahlung der Energien 400, 800, 1200 und 1600 keV mit den entsprechenden Peaks, der Vollenergiedeponierungen, an den entsprechenden Stellen zu sehen. Zusätzlich sind durch den weiteren, zu einem Peak gehörenden Kurvenverlauf die Ereignisse mit Teilenergiedeponierungen zu ersehen.

Die Strukturen der Verteilung gehen aus Figur 5 hervor, das ist gewissermaßen die Darstellung der Antwortmatrix $R_{ij}$. Figur 4 ist ein Schnitt daraus. Die diagonale Erhebung 1 zeigt den Photopeak. Nach links parallel dazu schließt sich die Struktur des Single-Escape-Peaks 2 an, der zu niederen Energien hin abfällt, abflacht und schließlich untergeht. Ganz ähnlich verläuft dazu links angeschlossen der Double-Escape-Peak 3. Es sind darin alle Antwortfunktionen nebeneinander als Matrix zu sehen. Die Struktur der Matrix spiegelt die physikalischen Vorgänge wider, die im Detektor ablaufen: Vollenergiedeponierung im Peak 1. Ab 1,022 MeV werden Photonen in Paarbildungprozessen in Positronen und Elektronen umgewandelt. Da die Positronen wiederum in 2 Gammaquanten annihilieren, sind Peaks an den entsprechenden Stellen zu finden. Peak 2 ein Annihilationsquant, Peak 3 zwei Annihilationsquanten entweichen aus dem Detektor. In Peak 4 ist der Peak der erzeugten Annihilationsquanten zu sehen. In Peak 5 ist der Rückstreupeak der Gammastrahlung, die am Gehäuse zurückgestreut und anschließend absorbiert werden, zu sehen.

**Patentansprüche**

1. Verfahren für die spektrometrische photonendosimetrie für Röntgen- und Gammastrahlung aus dem keV- bis in den MeV-Bereich zur integralen (9) als auch zur nuklidspezifischen (6) Bestimmung der Gammadosisleistung, bei dem:

- in mindestens einer Energiegruppe ein Spektrum gemessen wird;
- mit einem Spektrometer und mit einem Pulshöhenanalysator eine Messung der Pulshöhenverteilung (6) durchgeführt wird, wobei das Spektrometer eine Anzahl Kanäle hat, derart, dass die zu messende Pulshöhenverteilung (6) im gesamten zu messenden Energiebereich mit einer geforderten Auflösung abgebildet werden kann;
- in einem Entfaltungsschritt die gemessene Pulshöhenverteilung über einen Entfaltungsvorgang in ein Photonenspektrum umgerechnet wird, wobei der Entfaltungsvorgang unter verwendung einer Matrixinversion durchgeführt wird und beim Entfaltungsvorgang Antwortfunktionen benutzt werden, die dieselbe Energieauflösung wie die Pulshöhenverteilung haben;
- aus dem Photonenspektrum unter Anwendung von Dosiskonversionsfaktoren das Dosisspektrum berechnet wird;
- und durch Aufsummierung des Dosisspektrums die integrale Dosis oder die auf das Messzeitinterval bezogene Dosis, also die Dosisleistung, bestimmt wird,

   **dadurch gekennzeichnet, dass**

   - die energieabhängigen Dosiskonversionsfaktoren jeweils auf die mittlere Energie des entsprechenden Energieintervalls bezogen werden,
   - wobei das spektrometer zur Ermittlung der integralen Dosisleistung in einer niedrig auflösenden Betriebsart (8) betrieben wird und zur Analyse der Strahlungsquellen, bei denen die Nuklide identifiziert werden müssen, von denen höhere Dosisleistungen verursacht werden, auf die hoch auflösende Betriebsart (6) umgeschaltet wird.

2. Verfahren nach Anspruch 1, **dadurch gekennzeichnet, dass** die Messung der Pulshöhenverteilung (6) mit dem Spektrometer und dem Pulshöhenanalysator mit typischerweise etwa $2^{11} = 2048$ Kanälen durchgeführt wird, wozu die Kanäle für ein hoch auflösendes Spektrometer typischerweise zwischen 0,5 und 1 keV äquidistant auseinander liegen.

3. Verfahren nach Anspruch 2, **dadurch gekennzeichnet, dass** bei hoher Dosisleistung die aktive Messzeit durch Abschaltung der Datenaufnahme in gleichen Zeitintervallen untersetzt und bei der späteren Dosisermittlung wieder korrigiert wird, wobei die Dauer der zeitlichen Lücken an das Niveau der Dosisleistung angepasst wird.

4. Verfahren nach Anspruch 3, **dadurch gekenn-**

**zeichnet, dass** zusätzlich zur Umgebungsäquivalentdosis die Organdosen durch Anwendung richtungsspezifischer Konversionsfaktoren berechnet werden.

5. Verfahren nach einem der vorangehenden Ansprüche 1 bis 4, **dadurch gekennzeichnet, dass** die Dosisleistungen kontinuierlich strahlender Strahlungsquellen vermessen werden.

6. Verfahren nach einem der vorangehenden Ansprüche 1 bis 4, **dadurch gekennzeichnet, dass** die Dosisleistungen periodisch strahlender Strahlungsquellen vermessen werden, sofern die Bearbeitungszeit des Messgeräts und die Pulsperiode der Strahlungsquelle berücksichtigt werden, wodurch minimale Pulslängen messbar werden.

**Claims**

1. Method for spectrometric photon dosimetry for X-ray and gamma radiation from the keV range to the MeV range for the integral (9) and nuclide-specific (6) determination of the gamma dose output
wherein

   - a spectrum is measured in at least one energy group;
   - a measurement of the pulse height distribution (6) is carried out with a spectrometer and a pulse height analyzer, wherein the spectrometer has a number of channels such that the pulse height distribution (6) to be measured can be represented with a required resolution over the entire energy range to be measured;
   - in an unfolding step the measured pulse height distribution can be converted into a photon spectrum via an unfolding process, wherein the unfolding process can be carried out using a matrix inversion and response functions are used in the unfolding process that have the same energy resolution as the pulse height distribution;
   - the dose spectrum is calculated from the photon spectrum with the use of dose conversion factors; and wherein
   - the integral dose or the dose per measurement time interval, i.e., the dose output, is determined through summation of the dose spectrum,

   **characterized in that**

   - the energy-dependent dose conversion factors are in each case referred to the mean energy of the corresponding energy interval,
   - wherein a spectrometer is operated in a low resolution operating mode (8) to establish the integral dose output and which is switched to a high resolution operating mode (6) for analysis of the radiation sources for which those nuclides have to be identified that give rise to higher dose outputs.

2. Method according to claim 1, **characterized in that** the measurement of the pulse height distribution (6) with the spectrometer and the pulse height analyzer is carried out with typically approximately $2^{11} = 2048$ channels, wherein the channels for a high-resolution spectrometer typically lie equidistant from one another between 0.5 and 1 keV.

3. Method according to claim 2, **characterized in that** at a high dose output the active measurement time is split into equal time intervals through switch-off of the data acquisition and upon later dose determination is corrected again, wherein the duration of the gaps in time is adapted to the level of the dose output.

4. Method according to claim 3, **characterized in that** in addition to the ambient dose equivalent the organ doses are calculated through the application of direction-specific conversion factors.

5. Method according to one of the preceding claims 1 to 4, **characterized in that** the dose outputs of radiation sources that emit radiation continuously are measured.

6. Method according to one of the preceding claims 1 to 4, **characterized in that** the dose outputs of radiation sources that emit radiation periodically are measured, in so far as the processing time of the measurement device and the pulse period of the radiation source are taken into account, as a result of which minimal pulse lengths become measurable.

**Revendications**

1. Procédé destiné à la dosimétrie photonique spectrométrique pour rayons X et gamma de la plage des keV jusqu'aux MeV pour la détermination du débit de dose gamma tant intégrale (9) que spécifique aux nucléides (6),
dans lequel

   - un spectre est mesuré dans au moins un groupe d'énergie ;
   - est effectuée une mesure de la répartition des hauteurs d'impulsion (6) avec un spectromètre et un analyseur de hauteurs d'impulsion, sachant que le spectromètre a un nombre de canaux de sorte que la répartition des hauteurs d'impulsion (6) à mesurer puisse être représentée avec une résolution requise dans la totalité de la plage d'énergie à mesurer ;

- lors d'une phase d'étalement, la répartition des hauteurs d'impulsion mesurée est convertie en un spectre photonique par une opération d'étalement, sachant que l'opération d'étalement est effectuée en utilisant une inversion de matrice et que lors de l'opération d'étalement sont utilisées des fonctions de réponse qui ont la même résolution en énergie que la répartition des hauteurs d' impulsion ;
- est calculé le spectre de dose à partir du spectre photonique en appliquant des facteurs de conversion de dose ; et dans lequel
- la dose intégrale ou la dose rapportée à l'intervalle entre deux mesures, donc le débit de dose, est déterminée par totalisation du spectre de dose,

**caractérisé en ce que**

- les facteurs de conversion de dose dépendant de l'énergie sont respectivement rapportés à l'énergie moyenne de l'intervalle d'énergie correspondant,
- sachant que le spectromètre est exploité dans un mode opératoire à faible résolution (8) pour déterminer le débit de dose intégral, et qu'il est commuté dans le mode opératoire à haute résolution (6) pour analyser les sources de rayonnement à l'intérieur desquelles il faut identifier les nucléides qui provoquent des débits de dose plus élevés.

2. Procédé selon la revendication 1, **caractérisé en ce que** la mesure de la répartition des hauteurs d'impulsion (6) avec le spectromètre et l'analyseur de hauteurs d'impulsions est effectuée avec typiquement quelque $2^{11}$ = 2048 canaux, sachant que les canaux pour un spectromètre à haute résolution sont équidistants d'une valeur typiquement comprise entre 0,5 et 1 keV.

3. Procédé selon la revendication 2, **caractérisé en ce qu'**en présence d'un débit de dose élevé, le temps de mesure actif est subdivisé par interruption de l'enregistrement des données selon des intervalles de temps égaux, et est de nouveau corrigé lors de la détermination de dose ultérieure, la durée des temps de défaillance étant adaptée au niveau du débit de dose.

4. Procédé selon la revendication 3, **caractérisé en ce qu'**en plus de la dose équivalente ambiante sont calculées les doses organiques par application de facteurs de conversion dépendant de la direction.

5. Procédé selon l'une des revendications 1 à 4 précédentes, **caractérisé en ce que** sont mesurés les débits de dose de sources de rayonnement rayonnant en continu.

6. Procédé selon l'une des revendications 1 à 4 précédentes, **caractérisé en ce que** sont mesurés les débits de dose de sources de rayonnement rayonnant périodiquement en tenant compte des temps de traitement de l'appareil de mesure et de la période d'impulsion de la source de rayonnement, ce qui rend mesurables des durées d'impulsion minimes.

# Fig. 1

```
┌─────────────────────────────────────────┐
│     Gemessene Pulshöhenverteilung        │
└─────────────────────────────────────────┘
                     │
              ┌──────────────┐
              │  Entfaltung  │
              └──────────────┘
                     │
           ┌──────────────────────┐
           │   Photonenspektrum   │
           └──────────────────────┘
                     │
                     ▼
            ┌──────────────────┐
            │   Dosisspektrum  │
            └──────────────────┘
```

Fig. 2

Fig. 3

## Fig. 4

## Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3646347 A

### In der Beschreibung aufgeführte Nicht-Patentliteratur

- *Praxis des Strahlenschutzes: Messen, Modellieren, Dokumentieren,* Januar 2002, vol. 34, 485-492
- Unfolding the response of a Ge detector used forin-situgamma-ray spectrometry. **G. FEHREN-BACHER et al.** Nuclear instruments & methods in physics research, section - A: accelerators, spectrometers, detectors and associated equipment. Elsevier, 11. September 1996, vol. 383, 454-462
- **A. CLOUVAS et al.** Health Physics. *Conversion of in-situ gamma ray spectra,* Februar 1998, vol. 74 (2